# FASCICULE DE BREVET EUROPEEN

(11) **EP 0 671 553 B1**
(45) Date de publication et mention de la délivrance du brevet: **04.02.1998**
(21) Numéro de dépôt: 95400480.0
(22) Date de dépôt: 06.03.1995
(51) Int. Cl.: F02B 27/02

(54) **Collecteur d'admission à impédance modulable et faible perte de charge**
Einlasskrümmer mit variabler Impedanz und geringer Einschränkung
Intake manifold with variable impedance and low restriction

(30) Priorité: 07.03.1994 FR 9402596
(43) Date de publication de la demande: 13.09.1995
(73) Titulaire: MAGNETI MARELLI FRANCE, 92000 Nanterre (FR)
(72) Inventeur: Ausiello, Francesco, Bologne (IT); Pontoppidan, Michael, F-92500 Rueil Malmaison (FR)
(74) Mandataire: Bérogin, Francis

(56) Documents cités:
- EP-A- 0 255 059
- DE-B- 1 294 087
- FR-A- 2 194 886
- PATENT ABSTRACTS OF JAPAN vol. 9 no. 84 (M-371) ,13 Avril 1985 & JP-A-59 213921 (TOYOTA JIDOSHA KK) 3 Décembre 1984,
- PATENT ABSTRACTS OF JAPAN vol. 14 no. 583 (M-1064) ,11 Octobre 1990 & JP-A-02 252918 (YAMAHA MOTOR CO LTD) 25 Mars 1989,
- PATENT ABSTRACTS OF JAPAN vol. 15 no. 61 (M-1081) ,13 Février 1991 & JP-A-02 291422 (NISSAN MOTOR CO LTD)
- PATENT ABSTRACTS OF JAPAN vol. 14 no. 532 (M-1051) ,22 Novembre 1990 & JP-A-02 223632 (YAMAHA MOTOR CO LTD) 6 Septembre 1990,
- RESEARCH DISCLOSURE, EMSWORTH, GB, page 428 DISCLOSED ANONYMOUSLY 'ENGINE INTAKE TUNING'
- DATABASE WPI Week 1188 17 Mars 1988 Derwent Publications Ltd., London, GB; AN 88-076282 & SU-A-1 328 566 (BARSUKOV) , 7 Août 1987

## Description

L'invention concerne un collecteur d'admission à impédance modulable et faible perte de charge, pour moteur à combustion interne équipé d'une installation d'alimentation en combustible par injection, en particulier du type dit "multipoint", comportant, pour chaque cylindre du moteur, au moins un injecteur, qui injecte du combustible dans un conduit d'aspiration du collecteur d'admission d'air au moteur, directement en amont de la ou des soupapes d'admission du cylindre correspondant.

On connait déjà des collecteurs d'admission, pour moteurs à combustion interne alimentés par injection, et comprenant chacun :
- un plenum, positionné en aval d'un corps de papillon commandant le débit d'air d'alimentation du moteur, et définissant un volume de résonance, et
- des conduits d'aspiration, en nombre au moins égal à celui des cylindres du moteur, et dont chacun alimente un cylindre correspondant en air d'admission qu'il reçoit dans le plenum.

Ces collecteurs d'admission connus présentent les inconvénients suivants : chaque modèle de collecteur d'admission est défini et réalisé de manière à être accordé en fréquence en fonction du moteur qu'il est destiné à équiper, afin de présenter des performances optimales acoustiques et fluidiques. Mais, toute évolution ou modification du moteur impose de modifier le collecteur, et en particulier ses dimensions et formes, notamment la longueur des conduits d'aspiration ainsi que les évolutions de l'aire et/ou de la forme de leur section transversale, afin de conserver de bonnes propriétés acoustiques et fluidiques, ce qui implique le plus souvent une rédéfinition complète du collecteur d'admission.

Pour remédier à ces inconvénients, il a déjà été proposé des collecteurs d'admission accordables en fréquence, donc à performances acoustiques modulables. Mais ces collecteurs d'admission comportent deux tambours diffuseurs coaxiaux, emboîtés en spirale l'un dans l'autre, montés rotatifs l'un par rapport à l'autre, et munis de moyens de blocage relatif, permettant d'adapter le collecteur d'admission en fréquence au type de moteur qu'il équipe.

Il en résulte que ces dispositifs sont de structure complexe, donc coûteux, d'un encombrement important et présentent des pertes de charge élevées.

L'invention a pour but de remédier aux inconvénients précités et de proposer un collecteur d'admission à impédance modulable, qui réponde mieux que jusqu'à présent aux divers desiderata de la pratique.

Un but de l'invention est donc de proposer un collecteur d'admission à impédance modulable, qui présente de faibles pertes de charges, soit compact, permette une acoustique optimisée, et soit facilement adaptable à différentes familles de moteurs, ou encore adaptable en service sur un moteur, en fonction des conditions de fonctionnement du moteur.

Un autre but est de proposer un collecteur d'admission à impédance modulable qui soit d'une structure simple et économique, tout en acceptant les différents types possibles d'injecteurs.

A cet effet, l'invention propose un collecteur d'admission du type présenté ci-dessus, et qui se caractérise en ce qu'il comprend de plus :
- un diffuseur d'entrée d'air, dont l'entrée se raccorde sur la sortie du corps de papillon, et
- un guide d'écoulement d'air, assurant la répartition de l'air d'admission sortant du diffuseur vers les conduits d'aspiration, et monté en aval du diffuseur d'entrée, de sorte que la sortie du diffuseur débouche vers l'entrée tubulaire du guide, qui présente un bord amont espacé transversalement du bord aval du diffuseur, par rapport à la direction d'écoulement de l'air, de manière à définir entre le diffuseur d'entrée et le guide d'écoulement un effet de diaphragme permanent ajustable, le diffuseur d'entrée, le guide d'écoulement et au moins en partie les conduits d'aspiration étant logés dans le plenum.

Un tel collecteur d'admission a pour avantage que la présence du diffuseur en sortie du corps de papillon limite les pertes de charge, ainsi d'ailleurs que la répartition de l'air d'admission assurée par le guide d'écoulement d'air vers les conduits d'aspiration. De plus, l'ajustement de l'espacement entre le bord aval du diffuseur et le bord amont du guide d'écoulement permet de moduler les performances acoustiques, donc d'adapter le collecteur d'admission en fréquence au moteur sans avoir à bouleverser son architecture, tandis que le logement du diffuseur d'entrée, du guide d'écoulement et au moins partiellement des conduits d'aspiration dans le plenum, qui constitue une enveloppe définissant le volume global du collecteur, permet de donner à ce dernier une bonne compacité.

En outre, le fait que le collecteur ne comprenne que quatre pièces, à savoir le plenum, un ensemble de conduits d'aspiration, le diffuseur d'entrée et le guide d'écoulement, et que chaque pièce puisse être réalisée en matière de synthèse ou en métal ou alliage, de préférence moulable, est un facteur de simplification de structure, et donc un facteur d'économie.

Le collecteur d'admission selon l'invention peut être tel que le diffuseur d'entrée pénètre axialement selon l'axe de l'écoulement d'air dans l'entrée tubulaire du guide d'écoulement, de façon à présenter un recouvrement axial entre le diffuseur et le guide, si l'on souhaite, pour la modulation acoustique, que le volume interne au plenum mais entourant le diffuseur et le guide d'écoulement se comporte comme un résonateur en parallèle sur le conduit défini dans le diffuseur et le guide.

Par contre, si l'on souhaite que ce volume interne au plenum se comporte comme un résonateur en série entre le diffuseur d'entrée et le guide d'écoulement, tout en conservant la structure de base du collecteur, le diffuseur et le guide d'écoulement peuvent être disposés de sorte que le diffuseur débouche dans le plenum en amont du guide d'écoulement, et qu'il existe alors un espacement axial entre le bord aval du diffuseur et le bord amont du guide, ou que le bord aval du diffuseur soit sensiblement entouré par le bord amont du guide d'écoulement.

La position axiale et/ou transversale relative du diffuseur et du guide d'écoulement peut être figée pour un type de moteur, et ensuite modifiée et à nouveau figée pour chaque évolution ou adaptation du moteur, de manière à assurer la modulation acoustique adaptée à l'évolution d'une famille de moteurs, mais il est également possible, dans une forme de réalisation plus complexe et plus coûteuse, que le collecteur d'admission comprenne des moyens de réglage et de blocage de la position axiale et/ou transversale relative du diffuseur d'entrée et du guide d'écoulement, afin d'autoriser une adaptation en service, en fonction des conditions de fonctionnement du moteur.

Ces moyens de réglage peuvent être pilotés par au moins un actionneur, en fonction de l'état de charge du moteur équipé du collecteur, par exemple à partir de la détection de paramètres de fonctionnement du moteur tels que le régime moteur et la pression d'air au collecteur d'admission ou encore le débit d'air d'admission, de façon à accorder le comportement fluidique du collecteur aux points de couple maximum et de puissance maximum du moteur.

Dans des modes de réalisation préférés, permettant d'améliorer la compacité et/ou de diminuer encore les pertes de charge, le collecteur d'admission présente de plus l'une et/ou l'autre des dispositions suivantes :
- le guide d'écoulement répartit l'air d'alimentation vers deux groupes de conduits d'aspiration et comprend, en aval de son entrée tubulaire, deux branches alimentant chacune en air les entrées de l'un respectivement des groupes de conduits d'aspiration ;
- la section transversale de chaque branche du guide d'écoulement est sensiblement elliptique et progressivement décroissante vers les conduits d'aspiration ;
- le diffuseur d'entrée a la forme d'un divergent tronconique de section circulaire ;
- chaque conduit d'aspiration comprend une partie amont enroulée en arc de cercle depuis la sortie de la branche correspondante du guide d'écoulement et contenue dans le plenum, et une partie aval sensiblement rectiligne, dont l'extrémité aval, en saillie hors du plenum, est solidaire d'une bride de fixation à la culasse du moteur et est amenagée pour porter un injecteur de combustible dans le cylindre correspondant ; et
- la section transversale de chaque conduit d'aspiration est sensiblement conjuguée à la forme de la section que possède le conduit correspondant de la culasse du moteur, usuellement circulaire, ovale ou inscrit dans un rectangle, et sensiblement constante sur toute sa longueur.

D'autres avantages et caractéristiques de l'invention découleront de la description donnée ci-dessous, à titre non limitatif, d'un exemple de réalisation décrit en référence aux dessins annexés sur lesquels :
- la figure 1 représente schématiquement et en coupe longitudinale un collecteur d'admission pour un moteur à injection à quatre cylindres en ligne,
- la figure 2 représente schématiquement, en partie en coupe transversale et en partie en élévation latérale, le collecteur d'admission de la figure 1,
- la figure 3 représente également schématiquement, selon une autre coupe, le collecteur des figures 1 et 2,
- la figure 4 est un schéma synoptique correspondant à la figure 1, et
- les figures 5 et 6 sont des schémas correspondant au mode de fonctionnement en résonateur respectivement en parallèle et en série du dispositif de la figure 4, selon les positions axiales relatives du diffuseur et du guide d'écoulement.

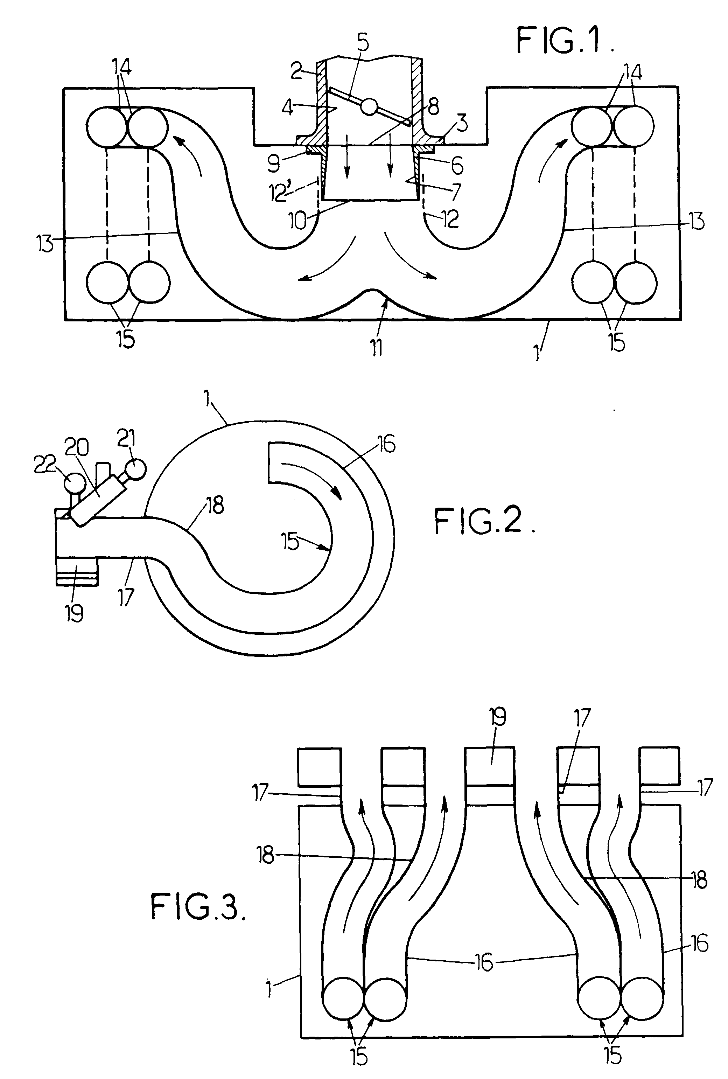

Le collecteur d'admission des figures 1 à 3 comprend un plenum 1, réalisé sous la forme d'un boîtier, constituant l'enveloppe du collecteur, et dont le volume interne constitue un volume de résonance. Sur l'extrémité amont de ce plenum 1 est fixé, par tout moyen mécanique approprié, un corps de papillon 2, muni, à cet effet, d'une bride 3 entourant l'extrémité de sortie de son conduit 4, dans lequel, de manière classique, un obturateur en forme de disque, appelé papillon 5, est monté en rotation autour d'un axe diamétral, afin de commander le débit d'air d'alimentation du moteur. Le plenum 1, ainsi positionné en aval du corps de papillon 2, présente une ouverture d'entrée d'air, directement en regard de la sortie du conduit 4 du corps de papillon 2, et définie par l'extrémité amont du canal 7 divergent tronconique, de section circulaire, d'un diffuseur d'entrée d'air 6, monté dans le plenum 1 de sorte que son entrée 8 se raccorde sur la sortie du corps de papillon 2. A cet effet, l'entrée 8 du diffuseur 6 est entourée d'une bride 9 radiale, par laquelle le diffuseur 6 peut être fixé à la fois à la paroi du plenum 1 et à la bride radiale 3. La sortie 10 du canal divergent 7, à l'extrémité aval du diffuseur 6, s'ouvre en regard de l'entrée tubulaire 12 d'un guide d'écoulement d'air 11 monté dans le plenum 1 en aval du diffuseur 6, de sorte que le bord amont du guide 11, définissant son entrée tubulaire 12, est espacé transversalement (par rapport à la direction d'écoulement de l'air représentée par des flèches dans le diffuseur 6 et le guide 11) du bord aval du diffuseur 6, définissant sa sortie 10.

De la sorte, un effet de diaphragme permanent est assuré par l'espacement transversal entre le diffuseur 6 et le guide 11, également réalisé sous la forme d'une pièce indépendante.

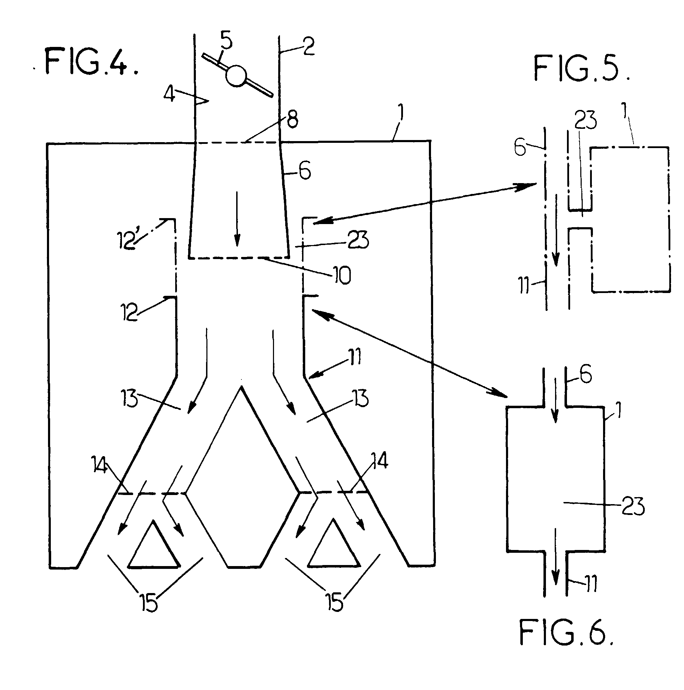

De plus, tel que représenté en traits pleins sur la figure 1, le guide 11 est fixé dans le plenum 1 de sorte que le diffuseur 6 débouche par sa sortie 10 dans le plenum 1, en amont de l'ouverture 12 du guide 11, et qu'il existe ainsi un espacement axial entre le bord amont du guide 11 et le bord aval du diffuseur 6. L'intérêt de ce montage est expliqué ci-dessous en référence aux figures 4 et 6.

Mais il est également possible, comme représenté en traits mixtes sur les figures 1 et 4, que le diffuseur 6 soit engagé axialement (selon l'axe commun au corps de papillon 2 et au diffuseur 6, et donc selon l'axe de l'écoulement d'air dans ces derniers), mais toujours avec un espacement radial ou transversal, dans l'entrée tubulaire 12' du guide 11. Le collecteur présente alors, entre le guide 11 et le diffuseur 6, un recouvrement axial défini par la distance axiale entre le bord amont de l'entrée 12' du guide 11 et le bord aval du diffuseur 6. L'intérêt de cette configuration est décrit ci-dessous en référence aux figures 4 et 5.

Pour passer progressivement d'une position d'espacement axial maximum à une position de recouvrement axial maximum, et/ou pour moduler l'espacement transversal, entre le bord aval du diffuseur 6 et le bord amont du guide 11, l'entrée tubulaire 12 de ce dernier peut être combinée à des moyens (non représentés) permettant de régler et bloquer la position axiale et/ou transversale relative du diffuseur 6 et du guide 11, qui peuvent être tous moyens mécaniques appropriés, par exemple des filetages complémentaires aménagés, l'un, sur la partie principale du guide 11 et l'autre sur son entrée tubulaire 12, réalisée sous forme d'embout ainsi monté axialement mobile sur la partie centrale du guide 11. Ces moyens de réglage peuvent permettre de régler en continu la position axiale et/ou radiale relative de la sortie du diffuseur 6 et de l'entrée du guide 11 sur un collecteur en service sur un moteur, par la manoeuvre d'au moins un actionneur à commande électrique, par exemple un moteur électrique de positionnement, piloté à partir de capteurs de régime moteur et de pression ou de débit d'air au collecteur d'admission, les mesures fournies par ces capteurs étant entrées, par exemple, dans une cartographie pour en déduire un signal électrique de commande de l'actionneur. Ce dernier peut, par exemple, déplacer l'entrée tubulaire 12 du guide 11 d'une première position, correspondant à une charge du moteur dans une première zone de fonctionnement du moteur, vers une seconde position, optimisée pour une seconde zone de fonctionnement du moteur.

Avec ou sans ces moyens de réglage de la position axiale et/ou radiale relative du diffuseur 6 et du guide 11, ces derniers peuvent également être fixés dans une position telle que le bord aval du diffuseur 6 soit sensiblement entouré par le bord amont de l'entrée tubulaire 12 du guide 11, sans espacement axial ni recouvrement axial sensible entre eux. Dans cette configuration intermédiaire, le collecteur d'admission fonctionne également comme expliqué ci-dessous en référence à la figure 6. Un réglage de la section transversale par modulation radiale de la sortie du diffuseur 6 et/ou de l'entrée du guide 11 est également possible, mais généralement plus coûteux.

Dans cet exemple de moteur à quatre cylindres en ligne, la partie centrale du guide 11 se subdivise et se prolonge en deux branches 13 symétriques et recourbées dans le plenum 1, pour alimenter chacune en air deux des quatre conduits d'aspiration 15 du collecteur, dont chaque conduit 15 est destiné à alimenter en air l'un respectivement des quatre cylindres du moteur. La section transversale de chaque branche 13 est progressivement décroissante de la partie centrale du guide 11, en aval de son entrée tubulaire 12, vers les conduits 15. De plus, la section transversale de chaque branche 13 peut être, de préférence, elliptique, et chaque branche 13 se termine, à son extrémité aval, par deux ouvertures de sortie 14 de même section, de forme conjuguée à celle de la section du conduit de culasse correspondant, qui prolonge dans la culasse chaque conduit d'aspiration. Par ces ouvertures de sortie 14, chaque branche 13 est raccordée à l'entrée, de même forme, de l'un respectivement des deux conduits 15 correspondants, dont la section transversale de chacun reste conjuguée à celle du conduit de culasse correspondant et sensiblement constante sur toute sa longueur.

Le guide 11 assure ainsi une répartition de l'air d'admission, sortant du diffuseur 6, de manière égale vers chacun des quatre conduits 15.

Ces conduits 15, de même longueur et section transversale, généralement elliptique, comportent chacun une partie amont 16, enroulée en arc de cercle en formant ainsi une portion de tore autour de l'axe du plenum 1 de forme généralement cylindrique, depuis la sortie 14 de la branche 13 correspondante du guide 11, cette partie amont 16 étant contenue dans le plenum 1, et une partie aval 17, qui est sensiblement rectiligne, et qui se raccorde à la partie amont 16 par une zone de transition 18 doublement coudée, comme visible sur le plan de coupe vertical de la figure 2 et dans le plan de coupe perpendiculaire de la figure 3. L'extrémité aval de chaque partie aval 17 fait saillie hors du plenum 1 et est solidaire d'une bride 19 de fixation à la culasse du moteur. La bride 19 et l'extrémité aval de chaque partie aval 17 de conduit 15 sont aménagées pour recevoir un injecteur de combustible 20 destiné, dans les installations d'injection du type multipoint, à injecter le combustible dans le conduit 15 correspondant, au niveau de la bride 19, c'est-à-dire juste en amont de la culasse du moteur, et donc de la ou des soupapes d'admission du cylindre correspondant. Cet injecteur 20 peut être de tous types connus, alimenté en carburant par exemple par le côté ou par le sommet. Dans l'exemple décrit, il s'agit d'un injecteur 20 alimenté par le sommet depuis une rampe d'alimentation en carburant 21, et assisté en air à partir de la rampe 22 d'air additionnel.

Du fait de la répartition régulière des parties aval 17 de conduit 15 le long de la bride 19, alors que les parties amont 16 des conduits 15 sont regroupées deux par deux dans les parties d'extrémité latérale du plenum 1, pour leur alimentation en air par les branches 13 du guide 11, on comprend que les zones coudées 18 des conduits 15 soient en fait contrecoudées pour les deux conduits 15 d'extrémité et simplement coudées pour les conduits 15 centraux, comme cela est représenté sur la figure 3, puisqu'ils doivent avoir la même longueur.

Du fait de leur solidarisation à la bride 19, les quatre conduits 15 et la bride 19 peuvent être réalisés sous la forme d'une pièce indépendante.

Le collecteur d'admission peut ainsi n'être réalisé que par l'assemblage de quatre pièces indépendantes, le plenum 1, le diffuseur 6, le guide 11 et l'ensemble des conduits 15 et de la bride 19, chaque pièce étant, de préférence, moulée, en matière synthétique ou en métal ou alliage.

La présence du diffuseur 6 en sortie du corps de papillon 2, son canal central divergent 7, ainsi que la présence du guide d'écoulement 11 et la forme ainsi que l'évolution de la section transversale de ses branches 13 ont pour effet de limiter les pertes de charge entre le corps de papillon 2 et les conduits d'aspiration 15.

Sur la figure 4, les éléments schématiquement représentés ont été repérés par les mêmes références numériques que les éléments correspondants du collecteur d'admission des figures 1 à 3.

Lorsque l'entrée tubulaire 12' du guide 11 est en position de recouvrement axial notable de la partie aval du diffuseur 6, ce recouvrement axial et l'effet de diaphragme permanent ajustable résultant de l'espacement transversal entre le diffuseur 6 et l'entrée 12' du guide 11 ont pour conséquence que le volume interne au plenum 1, autour du diffuseur 6 et du guide 11, d'une part, et, d'autre part, le volume interne au diffuseur 6 et au guide 11 se présentent comme deux volumes en parallèle, comme représenté sur la figure 5, et reliés l'un à l'autre par le diaphragme 23, l'un des volumes (6-11) étant parcouru par de l'air dans le sens indiqué par la flèche de la figure 5, de sorte que le volume interne au plenum 1 constitue un résonateur en parallèle, pour une onde sonore refoulée par le diaphragme 23.

Par contre, lorsque l'entrée tubulaire 12 du guide 11 définit non seulement le diaphragme transversal 23, mais également un espacement axial avec la sortie 10 en aval du diffuseur 6, ou lorsque cette sortie 10 du diffuseur 6 est sensiblement entourée par le bord amont de l'entrée 12 du guide 11, le volume interne au plenum 1 se comporte comme un résonateur en série (voir figure 6) vis-à-vis des ondes sonores développées dans le collecteur d'admission. Compte tenu des longueurs et sections des conduits 15 et des branches 13 du guide 11, on peut moduler, par le réglage de la position axiale de l'entrée du guide 11 par rapport à la sortie du diffuseur 6, les performances acoustiques du collecteur d'admission de sorte que ce dernier soit accordé en fréquence au moteur et soit relativement silencieux vis-à-vis des écoulements d'air interne, tout en procurant un gain de couple, et/ou, par le choix des formes du diffuseur 6 et du guide d'écoulement 11, obtenir un gain de puissance, à consommation donnée, de l'ordre de 4 % par rapport aux réalisations classiques de collecteur d'admission.

On note également que dans le collecteur selon l'invention, le réglage du positionnement axial relatif du diffuseur 6 et du guide 11 a pour effet de faire varier non seulement le recouvrement ou l'espacement axial entre le diffuseur 6 et le guide 11, mais également le diaphragme transversal 23 entre ces deux éléments.

On réalise bien ainsi un collecteur d'admission compact, puisque tous ses composants, sauf la bride 19 de fixation sur la culasse et les parties aval 17 des conduits d'aspiration 15, sont à l'intérieur du plenum 1, ayant des performances acoustiques modulables, puisque la position relative axiale et/ou transversale entre le diffuseur 6 et le guide 11 peut être ajustée, et présentant des pertes de charge optimisées lorsqu'on recherche le meilleur compromis entre nuisances acoustiques et pertes de charge réduites, du fait de la présence, des formes et des évolutions de sections du diffuseur d'entrée 6 et du guide d'écoulement 12.

## Revendications

1. Collecteur d'admission, pour moteur à combustion interne alimenté par injection, et comprenant :
- un plenum (1), positionné en aval d'un corps de papillon (2) commandant le débit d'air d'alimentation du moteur, et définissant un volume de résonance, et
- des conduits d'aspiration (15), en nombre au moins égal à celui des cylindres du moteur, et dont chacun alimente un cylindre correspondant en air d'admission qu'il reçoit dans le plenum (1),
caractérisé en ce qu'il comprend de plus :
- un diffuseur (6) d'entrée d'air, dont l'entrée (8) se raccorde sur la sortie du corps de papillon (2), et
- un guide (11) d'écoulement d'air, assurant la répartition de l'air d'admission sortant du diffuseur (6) vers les conduits (15) d'aspiration, et monté en aval du diffuseur (6) d'entrée, de sorte que la sortie (10) du diffuseur (6) débouche vers l'entrée tubulaire (12) du guide (11), qui présente un bord amont espacé transversalement du bord aval du diffuseur (6), par rapport à la direction d'écoulement de l'air, de manière à définir entre le diffuseur d'entrée (6) et le guide d'écoulement (11) un effet de diaphragme permanent ajustable (23), le diffuseur d'entrée (6), le guide d'écoulement (11) et au moins en partie les conduits d'aspiration (15) étant logés dans le plenum (1).

2. Collecteur d'admission selon la revendication 1, caractérisé en ce que le diffuseur d'entrée (6) pénètre axialement, selon l'axe de l'écoulement d'air, dans l'entrée tubulaire (12') du guide d'écoulement (11), de sorte à présenter un recouvrement axial entre le diffuseur (6) et le guide (11).

3. Collecteur d'admission selon la revendication 1, caractérisé en ce que le diffuseur (6) débouche dans le plenum (1) en amont du guide d'écoulement (11), de sorte qu'il existe un espacement axial entre le bord aval du diffuseur (6) et le bord amont du guide (11).

4. Collecteur d'admission selon la revendication 1, caractérisé en ce que le bord aval du diffuseur (6) est sensiblement entouré par le bord amont du guide d'écoulement (11).

5. Collecteur d'admission selon l'une quelconque des revendications 1 à 4, caractérisé en ce qu'il comprend des moyens de réglage de la position axiale et/ou transversale relative du diffuseur d'entrée (6) et du guide d'écoulement (11).

6. Collecteur d'admission selon l'une quelconque des revendications 1 à 5, caractérisé en ce que le diffuseur d'entrée (6) a la forme d'un divergent tronconique de section circulaire.

7. Collecteur d'admission selon l'une quelconque des revendications 1 à 6, caractérisé en ce que le guide d'écoulement (11) répartit l'air d'alimentation vers deux groupes de conduits d'aspiration (15) et comprend, en aval de son entrée tubulaire (12), deux branches (13) alimentant chacune en air les entrées de l'un respectivement des groupes de conduits d'aspiration (15).

8. Collecteur d'admission selon la revendication 7, caractérisé en ce que la section transversale de chaque branche (13) du guide d'écoulement (11) est sensiblement elliptique et progressivement décroissante vers les conduits d'aspiration (15).

9. Collecteur d'admission selon l'une quelconque des revendications 1 à 8, caractérisé en ce que chaque conduit d'aspiration (15) comprend une partie amont (16) enroulée en arc de cercle depuis la sortie (14) de la branche (13) correspondante du guide d'écoulement (11) et contenue dans le plenum (1), et une partie aval (17) sensiblement rectiligne, dont l'extrémité aval, en saillie hors du plenum (1), est solidaire d'une bride (19) de fixation à la culasse du moteur et est amenagée pour porter un injecteur (20) de combustible dans le cylindre correspondant.

10. Collecteur d'admission selon l'une quelconque des revendications 1 à 9, caractérisé en ce que la section transversale de chaque conduit d'aspiration (15) est sensiblement conjuguée à la forme de section du conduit de culasse correspondant et sensiblement constante sur toute sa longueur.

## Patentansprüche

1. Einlaßkrümmer für einen Kraftstoffeinspritzmotor, aufweisend:
- eine Sammelkammer (1), die stromabwärts von einer Ventilklappe (2) angeordnet ist, welche den Luftdurchsatz zur Versorgung des Motors steuert und ein Resonanzvolumen festlegt, und
- Belüftungskanäle (15) in einer Anzahl, die zumindest derjenigen der Motorzylinder entspricht, und von denen jeder einen Zylinder entsprechend der Luftzufuhr, die er in der Sammelkammer (1) empfängt, versorgt wird,
dadurch gekennzeichnet, daß er außerdem aufweist:
- einen Luftzustromverteiler (6), dessen Einlaß (8) sich an den Auslaß der Ventilklappe (2) anschließt, und
- eine Luftströmungsführung (11), die die Verteilung der Zufuhrluft sicherstellt, die aus dem Verteiler (6) in Richtung auf die Lüftungsleitungen (15) verläßt und stromabwärts vom Luftzustromverteiler (6) derart angebracht ist, daß der Ausgang (10) des Verteilers (6) in Richtung des rohrförmigen Einlasses (12) der Führung (11) mündet, die einen stromaufwärtigen Rand aufweist, der quer zum stromabwärtigen Rand des Verteilers (6) in bezug auf die Luftströmungsrichtung (23) derart beabstandet ist, daß zwischen dem Verteilereinlaß (6) und der Strömungsführung (11) eine dauerhafte einstellbare Membranwirkung festgelegt ist, wobei der Verteilereinlaß (6) die Strömungsführung (11) und zumindest ein Teil der Belüftungsleitungen (15) in der Sammelkammer (1) untergebracht sind.

2. Einlaßkrümmer nach Anspruch 1, dadurch gekennzeichnet, daß der Zuströmverteiler (6) entlang der Luftströmungsachse axial in den rohrförmigen Einlaß (12') der Strömungsführung (11) derart eintritt, daß zwischen dem Verteiler (6) und der Führung (11) eine axiale Überlappung vorliegt.

3. Einlaßkrümmer nach Anspruch 1, dadurch gekennzeichnet, daß der Verteiler (6) in die Sammelkammer (1) stromaufwärts von der Strömungsführung (11) derart mündet, daß zwischen dem stromabwärtigen Rand des Verteilers (6) und dem stromaufwärtigen Rand der Führung (11) axial ein Zwischenraum vorliegt.

4. Einlaßkrümmer nach Anspruch 1, dadurch gekennzeichnet, daß der stromabwärtige Rand des Verteilers (6) im wesentlichen durch den stromaufwärtigen Rand der Strömungsführung (11) umgeben ist.

5. Einlaßkrümmer nach einem der Ansprüche 1 bis 4, dadurch gekennzeichnet, daß er Mittel zum Regeln der Axial- und/oder Querposition relativ zu dem Zuströmverteiler (6) und der Strömungsführung (11) aufweist.

6. Einlaßkrümmer nach einem der Ansprüche 1 bis 5, dadurch gekennzeichnet, daß der Zuströmverteiler (6) die Form eines kegelstumpfförmigen Rohrs mit kreisförmigem Querschnitt aufweist.

7. Einlaßkrümmer nach einem der Ansprüche 1 bis 6, dadurch gekennzeichnet, daß die Strömungsführung (11) die Versorgungsluft in Richtung auf zwei Versorgungsleitungsgruppen (15) verteilt und stromabwärts von ihrem rohrförmigen Einlaß (12) zwei Verzweigungen (13) aufweist, die jeden der Einlässe von einer jeweiligen der Versorgungsleitungsgruppen (15) mit Luft versorgt.

8. Einlaßkrümmer nach Anspruch 7, dadurch gekennzeichnet, daß der Querschnitt von jeder Verzweigung (13) der Strömungsführung (11) im wesentlichen elliptisch ist und abnehmend in Richtung auf die Belüftungsleitungen (15) abnimmt.

9. Einlaßkrümmer nach einem der Ansprüche 1 bis 8, dadurch gekennzeichnet, daß jede Versorgungsleitung (15) einen stromaufwärtigen Teil (16) aufweist, der ausgehend vom Auslaß (14) der entsprechenden Verzweigung (13) der Strömungsführung (11) kreisbogenförmig eingerollt ist und sich in den Sammelraum (11) fortsetzt, und einen im wesentlichen geradlinigen stromabwärtigen Teil (17), dessen stromabwärtiges Ende, das aus der Sammelkammer (1) vorsteht, mit einem Befestigungsflansch (19) für die Befestigung am Zylinderkopf des Motors gemeinsam gebildet ist und dazu angeordnet ist, eine Kraftstoffeinspritzdüse (20) im entsprechenden Zylinder zu tragen.

10. Einlaßkrümmer nach einem der Ansprüche 1 bis 9, dadurch gekennzeichnet, daß der Querschnitt jeder Belüftungsleitung (15) im wesentlichen der Querschnittsform des entsprechenden Zylinderkopfkanals entspricht und im wesentlichen über seine gesamte Länge konstant ist.

## Claims

1. An admission manifold for an internal combustion engine having fuel injection, the manifold comprising:
a plenum chamber (1) positioned downstream from a butterfly valve (2) that controls the flow of air fed to the engine, and that defines a resonance volume; and
at least as many suction ducts (15) as there are cylinders in the engine, each suction duct feeding a corresponding cylinder with admission air that it receives in the plenum chamber (1);
the manifold being characterized in that it further comprises:
an air inlet diffuser (6) whose inlet (8) is connected to the outlet of the butterfly valve (2); and
an air flow guide (11) for sharing admission air leaving the diffuser (6) between the suction ducts (15), and mounted downstream from the inlet diffuser (6) in such a manner that the outlet (10) from the diffuser (6) opens out towards the tubular inlet (12) of the guide (11) which has an upstream edge spaced transversely from the downstream edge of the diffuser (6) relative to the air flow direction so as to define an adjustable permanent diaphragm effect (23) between the inlet diffuser (6) and the flow guide (11), the inlet diffuser (6), the flow guide (11), and at least part of the suction ducts (15) being housed in the plenum chamber (1).

2. An admission manifold according to claim 1, characterized in that the inlet diffuser (6) penetrates axially along the air flow axis into the tubular inlet (12') of the flow guide (11) in such a manner as to present axial overlap between the diffuser (6) and the guide (11).

3. An admission manifold according to claim 1, characterized in that the diffuser (6) opens out into the plenum chamber (1) upstream from the flow guide (11) in such a manner that an axial space exists between the downstream edge of the diffuser (6) and the upstream edge of the guide (11).

4. An admission manifold according to claim 1, characterized in that the downstream edge of the diffuser (6) is substantially surrounded by the upstream edge of the flow guide (11).

5. An admission manifold according to any one of claims 1 to 4, characterized in that it includes means for adjusting the relative axial and/or transverse position of the inlet diffuser (6) and of the flow guide (11).

6. An admission manifold according to any one of claims 1 to 5, characterized in that the inlet diffuser (6) has a frustoconical diverging shape that is circular in section.

7. An admission manifold according to any one of claims 1 to 6, characterized in that the flow guide (11) shares the admission air between two groups of suction ducts (15) and includes, downstream from its tubular inlet (12), two branches (13), each feeding air to the inlets of a respective one of the groups of suction ducts (15).

8. An admission manifold according to claim 7, characterized in that the cross-section of each branch (13) of the flow guide (11) is substantially elliptical and progressively tapering towards the suction ducts (15).

9. An admission manifold according to any one of claims 1 to 8, characterized in that each suction duct (15) includes an upstream portion (16) wound in a circular arc from the outlet (14) of the corresponding branch (13) of the flow guide (11) and contained in the plenum chamber (1), and a downstream portion (17) that is substantially rectilinear, the downstream end thereof projecting from the plenum chamber (1) and being secured to a flange (19) for fixing to the cylinder head of the engine and designed to carry an injector (20) for injecting fuel into the corresponding cylinder.

10. An admission manifold according to any one of claims 1 to 9, characterized in that the cross-section of each section duct (15) is substantially complementary to the shape of the section of the corresponding cylinder head duct and is substantially constant along its entire length.
